# EUROPÄISCHE PATENTSCHRIFT

(11) **EP 1 178 086 B1**
(45) Veröffentlichungstag und Bekanntmachung des Hinweises auf die Patenterteilung: **19.04.2006**
(21) Anmeldenummer: 00116895.4
(22) Anmeldetag: 04.08.2000
(51) Int. Cl.: C09D 1/10, C04B 28/10

(54) **Bindemittel und Verfahren zur Herstellung**
Binder and method of manufacture
Liant et son procédé de préparation

(43) Veröffentlichungstag der Anmeldung: 06.02.2002
(73) Patentinhaber: Ruf, Klaus, 91207 Lauf-Neunhof (DE)
(72) Erfinder: Ruf, Klaus, 91207 Lauf-Neunhof (DE)
(74) Vertreter: Grünecker, Kinkeldey, Stockmair & Schwanhäusser Anwaltssozietät

(56) Entgegenhaltungen:
- EP-A- 0 872 524
- DE-C- 4 127 684
- GB-A- 1 030 302

## Beschreibung

Die Erfindung bezieht sich auf ein Bindemittel und ein Verfahren zur Herstellung.

Als Bindemittel für Pütze, Farben oder Hinterfüll- bzw. Vergießmassen wird, wenn diese auf Kalkbasis sein sollen, bisher reiner Kalk, beispielsweise gelöschter Kalk eingesetzt. Diese Bindemittel eignen sich zwar für die Verwendung beispielsweise bei der Restaurierung von Altgebäuden und auf Untergründen, die sich mit den modemen Farben nicht vertragen; die mit reinem Kalk als Bindemittel hergestellten Produkte lassen jedoch im Hinblick auf ihre Festigkeit, ihre Haftung auf dem Untergrund, ihre Frostsicherheit und dgl. zu wünschen übrig.

Steinlasuren werden zum Oberflächenschutz von Steinen gegen Umwelteinflüsse verwendet. Diese werden gegenwärtig nur auf der Basis von Polymeren, Acrylen oder Tylosen hergestellt, die im Denkmalschutz nicht erwünscht sind.

Die EP-A-0 872 524 beschreibt ein Verfahren zum Herstellen einer Casein-Kalkfarbe. Die Casein-Kalkfarbe enthält Weißfeinkalk, Harnstoffharze, Casein, Glukose und Marmormehl sowie zusätzlich Öl, Talkum und Borax. Sie enthält kein Kieselgur. Außerdem werden die Bestandteile, insbesondere der Kalk nicht auf eine pudrige Beschaffenheit gebracht. Auch ist nicht beschrieben, dass die bekannte Kalkfarbe auch als Bindemittel einsetzbar ist.

Die DE-C-41 27 684 beschreibt ein Zusatzmittel für Putze, das in einer Menge zwischen 1 bis 5 g pro kg einer für einen Kalkputz verwendeten Sand-Kalk-Mischung zugegeben wird. Das Zusatzmittel selbst enthält kein Kalk, enthält jedoch Naphtalin- oder Melamin-Formaldehydkondensate, Stärkezucker und Casein, sowie zusätzlich Dextrin, Fruchtsäuren, Lufiporen-Stabilisator, Borsäure oder Borax sowie Soda und/oder Natron, enthält jedoch weder Kieselgur noch Marmormehl. Es nicht beschrieben, dass das Zusatzmittel eine pudrige Beschaffenheit aufweisen muss.

Die GB-A-1 030 302 beschreibt ein Oberflächenbeschichtungsmaterial, das beispielsweise einen herkömmlichen Putz an vertikalen und horizontalen Oberflächen ersetzen kann. Das Beschichtungsmaterial enthält Melamin- oder Hamstoffverbindungen, sowie reaktiv wirkende Hydroxyl- und/oder Carboxylgruppen, die beim Lösen in Wasser miteinander reagieren. Das Oberflächenbeschichtungsmaterial soll nichthydraulisch sein.

Der Erfindung liegt somit die Aufgabe zugrunde, ein Bindemittel auf Kalkbasis mit einer gegenüber herkömmlichen Kalk-Bindemitteln erhöhten Festigkeit, besseren Haftung und besseren Frostsicherheit bereitzustellen.

Die Aufgabe wird durch das Bindemittel gemäß Anspruch 1 und das Verfahren gemäß Anspruch 7 gelöst.

Das erfindungsgemäße Bindemittel, das außer Kalk, in Form von Kalkhydrat oder hydraulischem Kalk, noch weitere Bestandteile enthält, weist gegenüber reinem Kalk als Bindemittel eine wesentlich erhöhte Festigkeit, einer bessere Haftung und Frostsicherheit auf. Die Wetterbeständigkeit ist erhöht, und die mit dem erfindungsgemäßen Bindemittel hergestellten Produkte werden auch von Umweltgiften nicht so stark angegriffen. Auch die Härte der Produkte wird gefördert.

Die gemäß Anspruch 2 zugemischte Holzkohle hat sich als äußerst wirksames Fungizid und als Mittel gegen Moose oder Algen erwiesen. Außerdem fördert Holzkohle die Entfeuchtung des behandelten Untergrunds.

Anspruch 3 beschreibt eine besonders bevorzugte Rezeptur des erfindungsgemäßen Bindemittels.

Mit dem erfindungsgemäßen Bindemittel ist es erstmals möglich, eine Steinlasur gemäß Anspruch 4 auf Kalkbasis herzustellen, die in der Lage ist, Stein gegen Witterungseinflüsse zu schützen, ohne den Charakter des Steins zu stark zu verdecken.

Mit der mit dem erfindungsgemäßen Bindemittel hergestellten Hinterfüll- oder Vergießmasse gemäß Anspruch 5 oder dem Putz gemäß Anspruch 6 können geschädigte Putzoberflächen repariert werden, eine Oberflächenverfestigung von alten, historischen, sandenden Luftkalkputzen sowie eine Hinterfüllung oder Verpressung von hohlen Putz- und Steinelementen durchgeführt werden. Das Bindemittel kann zur Herstellung von Spezialputzen für Natursteinvermauerungen, Natursteinsanierungen und Verfugungen verwendet werden. Auch eignet sich das erfindungsgemäße Bindemittel zur Herstellung von Putzen für den Sockelbereich.

Es hat sich herausgestellt, dass das nach dem Verfahren nach Anspruch 7 hergestellte Bindemittel eine gegenüber einer normalen Mischung der Bestandteile überragende Eigenschaftsverbesserung aufweist. Dies ist offensichtlich auf die signifikante Vergrößerung der Reaktionsoberflächen zurückzuführen, die mit dem erfindungsgemäß vorgeschlagenen Verfahren erreicht werden. Damit wird insbesondere erreicht, dass die Karbonisierung rascher einsetzt und durch die pulver- bzw. puderförmige Beschaffenheit der so behandelten Bestandteile eine wesentlich vollständigere Reaktion eintritt.

Zweckmäßigerweise werden gemäß Anspruch 8 alle Bestandteile des Bindemittels auf diese Weise gemischt.

Als Mischvorrichtung eignet sich die in Anspruch 9 beschriebene Allzweckmaschine, die als Cutter auf dem Markt ist.

Ausführungsbeispiele der Erfindung werden nachfolgend näher erläutert.

Das erfindungsgemäße Bindemittel hat die folgende Zusammensetzung:

| | |
|---|---|
| 60 - 90 Gew.-% | Kalkhydrat oder hydraulischer Kalk (sulfatarm unter 1 %) |
| 1 - 7 Gew.% | Harnstoff CO(NH₂)₂ und/oder Tillmann O.F.T.-Verflüssiger und/oder Naphthalin- oder Melamin-Formaldehyd-Kondensationsprodukte |
| 2 - 9 Gew.% | Casein |
| 0,05 - 10 Gew.-% | Glucose und/oder Rohrzucker |
| 1 - 15 Gew.-% | Kieselgur |
| 5 - 20 Gew.-% | Marmormehl und/oder Kalkgesteinsmehl und/oder Kreide |

Wenn das Bindemittel für Anwendungen benötigt wird, die einen Schutz gegen Schimmelpilz- oder sonstigen Pilzbefall oder gegen den Bewuchs mit Algen und Moosen erfordert, beispielsweise für Außenanwendung, sollte das Bindemittel zusätzlich zwischen 0,05 bis 7 Gew.-% Holzkohle enthalten. Die Holzkohle fördert auch die Entfeuchtung des behandelten Untergrunds.

Eine besonders bevorzugte Rezeptur des erfindungsgemäßen Bindemittels ist Folgende:

| | |
|---|---|
| etwa 7900 g oder etwa 79 Gew.-% | Kalkhydrat oder hydraulischer Kalk (sulfatarm unter 1 %) |
| etwa 210 g oder etwa 2 Gew.-% etwa 420 g oder etwa 4 Gew.% | Harnstoff CO¹(NH₂)₂ und/oder Tillmann O.F.T.-Verflüssiger und/oder Naphthalin- oder Melamin-Formaldehyd-Kondensationsprodukte Casein |
| etwa 170 g oder etwa 1 Gew.-% | Glucose und/oder Rohrzucker |
| etwa 300 g oder etwa 3 Gew.% | Kieselgur |
| etwa 1000 g oder etwa 10 Gew.-% | Marmormehl und/oder Kalkgesteinsmehl und/oder Kreide |
| etwa 10 g oder etwa 1 Gew.-% | Holzkohle |

In beiden Rezepturen ist der zuerst genannte Stoff der bevorzugte Bestandteil, dieser kann jedoch mit den nachfolgend genannten Stoffen gemischt oder durch diese ersetzt werden.

Die Kieselgur ist bevorzugt die im Handel erhältliche "Börk"-Kieselgur.

Das Bindemittel wird hergestellt, indem man bevorzugt alle Bestandteile des Bindemittels nach den obigen Rezepturen trocken in einem Cutter, der mit rotierenden Messern versehen ist, oder in eine andere Mischvorrichtung mit schnell rotierenden Schlag- oder Schneidwerkzeugen, einfüllt und die Bestandteile bei Umdrehungsgeschwindigkeiten zwischen etwa 2000 bis etwa 4000 U/s über einen Zeitraum von etwa 5 bis 15 Min. mischt. Eine bevorzugte Umdrehungsgeschwindigkeit liegt bei etwa 3000 U/s und meist wird eine Mischdauer von etwa 5 Min. ausreichen. Die Bestandteile sind anschließend pulverförmig bis pudrig, d.h. weisen eine wesentlich größere Oberfläche auf als vor dem Mischen. Es wurde festgestellt, dass dadurch die Karbonisierung früher einsetzt und die allgemeine Reaktion der Bestandteile untereinander stark gefördert wird, was sowohl die Härte als auch die Haftfähigkeit als auch die Beständigkeit gegen Wettereinflüsse und Umweltgifte des mit dem erfindungsgemäßen Bindemittel hergestellten Produktes erhöht.

Es ist jedoch auch möglich, nur ausgewählte Bestandteile, beispielsweise den Kalk und die Gesteinsmehle im Cutter zu mischen und die anderen Bestandteile anschließend hinzuzugeben.

Das erfindungsgemäße Bindemittel ist verkaufsfähig und wird für einen Selbstansatz verkauft. So kann sich beispielsweise jeder Restaurator seine gewünschten Mörtel, Farblasuren und Farben selbst herstellen, indem er natürliche Sande, Steinmehle und die erforderlichen, bevorzugt mineralischen, Farbpigmente einmischt.

Eine Steinlasur unter Verwendung des erfindungsgemäßen Bindemittels kann beispielsweise hergestellt werden, indem man das Bindemittel mit Wasser im Verhältnis 1:3 mischt, d.h. etwa ein Teil Bindemittel in etwa drei Teilen Wasser anrührt. Diese Steinlasur kann zum Oberflächenschutz von Stein oder von geschädigten Putzoberflächen eingesetzt werden. Mit der erfindungsgemäßen Lasur kann auch eine Oberflächenverfestigung von alten, historischen, sandenden Luftkalkputzen und anderen Altputzen vorgenommen werden.

Das erfindungsgemäße Bindemittel kann auch für die Herstellung einer Hinterfüll- oder Vergießmasse verwendet werden, wobei bevorzugt jeweils etwa ein Teil des Bindemittels mit einem Teil Marmormehl und/oder Kalkgesteinsmehl und/oder Kreide und etwa einem Teil Sand, bevorzugt Grubensand, gemischt und mit Wasser auf die erforderliche Konsistenz gebracht wird. Diese Masse kann beispielsweise für die Natursteinvermauerung und für Verfugungen, die Hinterfüllung und Verpressung von hohlen Putz- und Steinelementen und dgl. Zwecke eingesetzt werden.

Ein Putz unter Verwendung des erfindungsgemäßen Bindemittels kann hergestellt werden, indem man das Bindemittel mit Sand im Mischungsverhältnis von etwa 1:3 mischt, d.h. auf ein Teil Bindemittel drei Teile Sand, bevorzugt Grubensand, gibt, und diese Mischung dann mit Wasser auf die erforderliche Konsistenz bringt. Durch Steuerung der Sieblinie der Sande kann beispielsweise ein Luftkalkputz mit Festigkeiten zwischen 8 N/mm² bis 12 N/mm² hergestellt werden.

Das erfindungsgemäße Bindemittel kann weiterhin auch für die Herstellung von Stuck eingesetzt werden.

## Patentansprüche

1. Bindemittel in Form einer pudrigen Trockenmischung, zum Herstellen von Putzen, Farben, Steinlasuren oder Hinterfüll- oder Vergießmassen mit folgender Zusammensetzung:
| | |
|---|---|
| 60 - 90 Gew.-% | Kalkhydrat oder hydraulischer Kalk (sulfatarm unter 1 %) |
| 1 - 7 Gew.-% | Harnstoff CO(NH₂)₂ und/oder Tillmann O.F.T.-Verflüssiger und/oder Naphthalin- oder Melamin-Formaldehyd-Kondensationsprodukte |
| 2 - 9 Gew.% | Casein |
| 0,05 - 10 Gew.-% | Glucose und/oder Rohrzucker |
| 1 - 15 Gew.-% | Kieselgur |
| 5 - 20 Gew.-% | Marmormehl und/oder Kalkgesteinsmehl und/oder Kreide |

2. Bindemittel nach Anspruch 1, **gekennzeichnet durch** einen zusätzlichen Gehalt von 0,05 bis 7 Gew.-% Holzkohle.

3. Bindemittel nach Anspruch 2, **gekennzeichnet durch** die folgende Zusammensetzung:
| | |
|---|---|
| etwa 7900 g oder etwa 79 Gew.% | Kalkhydrat oder hydraulischer Kalk (sulfatarm unter 1%) |
| etwa 210 g oder etwa 2 Gew.-% | Harnstoff CO (NH₂)₂ und/oder Tillmann O.F.T.-Verflüssiger und/oder Naphthalin- oder Melamin-Formaldehyd-Kondensationsprodukte |
| etwa 420 g oder etwa 4 Gew.% | Casein |
| etwa 170 g oder etwa 1 Gew.-% | Glucose und/oder Rohrzucker |
| etwa 300 g oder etwa 3 Gew.% | Kieselgur |
| etwa 1000 g oder etwa 10 Gew.-% | Marmormehl und/oder Kalkgesteinsmehl und/oder Kreide |
| etwa 10 g oder etwa 1 Gew.-% | Holzkohle |

4. Steinlasur **gekennzeichnet durch** etwa 1 Teil des Bindemittels nach einem der Ansprüche 1 bis 3, angerührt mit etwa 3 Teilen Wasser.

5. Hinterfüll- oder Vergießmasse **gekennzeichnet durch** etwa 1 Teil des Bindemittels nach einem der Ansprüche 1 bis 3, und etwa 1 Teil Marmormehl und/oder Kalkgesteinsmehl und/oder Kreide sowie etwa 1 Teil Sand, bevorzugt Grubensand, angerührt mit Wasser.

6. Putz **gekennzeichnet durch** 1 Teil des Bindemittels nach einem der Ansprüche 1 bis 3 und 3 Teile Sand, angerührt mit Wasser.

7. Verfahren zum Herstellen eines Bindemittels nach einem der Ansprüche 1 bis 3, für Putze, Farben, Steinlasuren oder Hinterfüll- oder Vergießmassen, **dadurch gekennzeichnet, dass** die Reaktionsoberfläche von Bestandteilen des Bindemittels, wenigstens von Kalkhydrat oder hydraulischem Kalk erhöht wird, indem sie trocken in einer Mischvorrichtung mit rotierenden Schlag- oder Schneidwerkzeugen mit einer Umdrehungsgeschwindigkeit von etwa 2000 bis etwa 4000 U/s etwa 5 bis 15 min. gemischt werden.

8. Verfahren nach Anspruch 7, **dadurch gekennzeichnet, dass** alle Bestandteile des Bindemittels in der Mischvorrichtung trocken gemischt werden.

9. Verfahren nach Anspruch 7 oder 8, **dadurch gekennzeichnet, dass** das Mischen in einem Cutter mit rotierenden Messern durchgeführt wird.

## Claims

1. Binder in the form of a powdery dry mixture for the preparation of plasters, paints, stone glazes or backfilling or casting compositions, having the following composition:
| | |
|---|---|
| 60 - 90 wt.% | hydrated lime or hydraulic lime (low-sulfate, below 1 %) |
| 1 - 7 wt.% | urea CO(NH₂)₂ and/or Tillmann O.F.T. liquefier and/or naphthalene- or melamine-formaldehyde condensation products |
| 2 - 9 wt.% | casein |
| 0.05- 10 wt.% | glucose and/or sucrose |
| 1 - 15 wt.% | kieselguhr |
| 5 - 20 wt.% | marble dust and/or limestone dust and/or chalk. |

2. Binder according to claim 1, **characterized by** an additional content of from 0.05 to 7 wt.% wood charcoal.

3. Binder according to claim 2, **characterized by** the following composition:
| | |
|---|---|
| about 7,900 g or about 79 wt.% | hydrated lime or hydraulic lime (low-sulfate, below 1 %) |
| about 210 g or about 2 wt.% | urea CO (NH₂)₂ and/or Tillmann O.F.T. liquefier and/or naphthalene- or melamine-formaldehyde |
| | condensation products |
| about 420 g or about 4 wt.% | casein |
| about 170 g or about 1 wt.% | glucose and/or sucrose |
| about 300 g or about 3 wt.% | kieselguhr |
| about 1,000 g or about 10 wt.% | marble dust and/or limestone dust and/or chalk |
| about 10 g or about 1 wt.% | wood charcoal. |

4. Stone glaze, **characterized by** about 1 part of the binder according to one of claims 1 to 3, stirred with about 3 parts of water.

5. Backfilling or casting composition, **characterized by** about 1 part of the binder according to one of claims 1 to 3 and about 1 part of marble dust and/or limestone dust and/or chalk and about 1 part of sand, preferably pit sand, stirred with water.

6. Plaster, **characterized by** 1 part of the binder according to one of claims 1 to 3 and 3 parts of sand, stirred with water.

7. Process for the preparation of a binder according to one of claims 1 to 3 for plasters, paints, stone glazes or backfilling or casting compositions, **characterized in that** the reaction surface of constituents of the binder, at least of hydrated lime or hydraulic lime, is increased by mixing them in the dry state in a mixing device with rotating beating or cutting tools having a speed of rotation of from about 2,000 to about 4,000 rps for about 5 to 15 min.

8. Process according to claim 7, **characterized in that** all the constituents of the binder are mixed in the dry state in the mixing device.

9. Process according to claim 7 or 8, **characterized in that** the mixing is carried out in a cutter having rotating blades.

## Revendications

1. Liant sous forme de mélange sec pulvérulent, pour la fabrication des crépis, de peintures, lasures minérales ou matériaux de rebouchage ou de lissage ayant la composition suivante :
| | |
|---|---|
| 60 à 90 % en poids de | Chaux hydratée ou chaux hydraulique (pauvre en sulfate : moins de 1 %) |
| 1 à 7 % en poids de | Urée CO(NH₂)₂ et/ou fluidifiant O.F.T. de Tillmann et/ou produits de condensation du naphtalène ou de mélamine - formaldéhyde |
| 2 à 9 % en poids de | Caséine |
| 0,05 à 10 % en poids de | Glucose et/ou sucre de canne |
| 1 à 15 % en poids de | Diatomite |
| 5 à 20 % en poids de | Farine de marbre et/ou de farine de calcaire et/ou de craie |

2. Liant selon la revendication 1, **caractérisé par** une teneur supplémentaire de 0,05 à 7 % en poids de charbon de bois.

3. Liant selon la revendication 2, **caractérisé par** la composition suivante :
| | |
|---|---|
| Environ 7900 g ou environ 79 % en poids de | Chaux hydratée ou chaux hydraulique (pauvre en sulfate : moins de 1 %) |
| Environ 210 g ou environ 2 % en poids de | Urée CO(NH₂)₂ et/ou fluidifiant O.F.T. de Tillmann et/ou produits de condensation du naphtalène ou de |
| | mélamine - formaldéhyde |
| Environ 420 g ou environ 4 % en poids de | Caséine |
| Environ 170 g ou environ 1 % en poids de | Glucose et/ou sucre de canne |
| Environ 300 g ou environ 3 % en poids de | Diatomite |
| Environ 1000 g ou environ 10 % en poids de | Farine de marbre et/ou de farine de calcaire et/ou de craie |
| Environ 10 g ou environ 1 % en poids de | Charbon de bois |

4. Lasure minérale, **caractérisée par** environ 1 partie de liant selon une des revendications 1 à 3, mélangée à environ 3 parties d'eau.

5. Enduit de rebouchage ou de lissage, **caractérisé par** environ 1 partie de liant, selon une des revendications 1 à 3 et environ 1 partie de farine de marbre et/ou de farine de calcaire et/ou de craie ainsi qu'environ 1 partie de sable, de préférence du sable de carrière, mélangées à de l'eau.

6. Crépi **caractérisé par** 1 partie de liant selon une des revendications 1 à 3, et 3 parties de sable, mélangées à de l'eau.

7. Procédé de préparation d'un liant selon une des revendications 1 à 3, pour des crépis, peintures, lasures minérales ou matériaux de rebouchage ou de lissage, **caractérisé en ce que** la surface réactionnelle des composants du liant, au moins de la chaux hydratée ou de la chaux hydraulique, est augmentée en les mélangeant à sec dans un dispositif de mélange muni d'outils d'éclatement et de découpe avec une vitesse de rotation d'environ 2000 à environ 4000 t/sec pendant environ 5 à 15 minutes.

8. Procédé selon la revendication 7, **caractérisé en ce que** tous les composants du liant sont mélangés à sec dans le dispositif de mélange.

9. Procédé selon la revendication 7 ou 8, **caractérisé en ce que** le mélange est réalisé dans un mélangeur à cutter, avec des lames en rotation.
